(19) Europäisches Patentamt
European Patent Office
Office européen des brevets

(11) **EP 1 461 228 B1**

(12) **FASCICULE DE BREVET EUROPEEN**

(45) Date de publication et mention
de la délivrance du brevet:
**02.11.2006 Bulletin 2006/44**

(51) Int Cl.:
**B60Q 1/46** *(2006.01)*    **B60Q 1/52** *(2006.01)*
**B60Q 1/44** *(2006.01)*

(21) Numéro de dépôt: **02801103.9**

(22) Date de dépôt: **06.12.2002**

(86) Numéro de dépôt international:
**PCT/FR2002/004206**

(87) Numéro de publication internationale:
**WO 2003/053738 (03.07.2003 Gazette 2003/27)**

(54) **SYSTEME D'ALLUMAGE AUTOMATIQUE DES FEUX DE DETRESSE DANS LES SITUATIONS CRITIQUES**

SYSTEM ZUM ANSCHALTEN VON WARNBLINKLICHTERN IN NOTSITUATIONEN

SYSTEM FOR SWITCHING ON HAZARD WARNING LIGHTS IN EMERGENCY CONDITIONS

(84) Etats contractants désignés:
**AT BE BG CH CY CZ DE DK EE ES FI FR GB GR IE IT LI LU MC NL PT SE SI SK TR**

(30) Priorité: **14.12.2001 FR 0116203**

(43) Date de publication de la demande:
**29.09.2004 Bulletin 2004/40**

(73) Titulaire: **Renault s.a.s.**
**92100 Boulogne Billancourt (FR)**

(72) Inventeurs:
• **BELLOT, Nicolas**
**F-75015 Paris (FR)**
• **JOUANNE, Pierre**
**F-78140 Velizy (FR)**
• **MEUNIER, Sylvain**
**F-78280 Guyancourt (FR)**

(74) Mandataire: **Davies, Owen Robert Treharne**
**RENAULT TECHNOCENTRE**
**Département Propriété Intellectuelle**
**Sce 00267 TCR GRA 2 36**
**1, avenue du Golf**
**78288 Guyancourt cedex (FR)**

(56) Documents cités:
EP-A- 0 976 613          WO-A-01/42045
WO-A-93/11000          DE-A- 3 818 454
DE-A- 4 139 215          DE-A- 19 516 286
US-A- 5 376 918

**Description**

La présente invention concerne les feux de détresse dans le domaine automobile. L'invention concerne plus particulièrement les systèmes permettant un déclenchement automatique des feux de détresse lors d'une situation à risque afin de permettre aux usagers d'autres véhicules d'adapter au plus vite leur conduite à cette situation.

Les systèmes d'allumage automatique de feux de détresse de ce type présentent l'avantage de prendre en compte des paramètres tels que la vitesse ou l'accélération du véhicule et de réagir à cet égard plus promptement que l'automobiliste.

La publication US 6 229 438 décrit un tel système de déclenchement des feux de détresse. Cette publication décrit et représente un contrôleur de feux de détresse auquel est connecté une multitude de circuit de détection. En particulier, un de ces circuits est en relation avec le système ABS du véhicule, l'activation de ce système déclenchant l'allumage des feux de détresse.

Un tel système est dangereux pour les divers automobilistes. D'une part, les feux de détresse sont mis en marche dès que le système ABS est activé, ce qui signifie qu'un infime blocage de roue, ne présentant pourtant aucun caractère dangereux pour l'utilisateur entraîne le déclenchement des feux de détresse. Ceci peut surprendre l'automobiliste suivant qui ne s'attend pas à une situation de freinage alors que les conditions de route sont bonnes, ce qui peut devenir dangereux, si il n'est pas équipé d'un système de déclenchement automatique des feux de détresse, pour les véhicules suivants et pour lui-même. D'autre part, un freinage intensif pourra ne pas être accompagné de la mise en marche des feux de détresse si le système ABS n'est pas activé. Le danger pour tous les automobilistes est alors évident.

La publication WO 93/1000A décrit quant à elle un procédé d'analyse de l'allumage et de l'extinction des feux de détresse d'un véhicule selon le préambule de la revendication 1.

La présente invention propose un procédé d'analyse de l'allumage et de l'extinction des feux de détresse d'un véhicule selon la revendication 1 permettant de déclencher avec discernement cet allumage et cette extinction, en utilisant des informations d'état du véhicule sans l'apport de capteurs spécifiques ou du système électronique de freinage d'urgence.

Selon l'invention, les conditions d'extinction des feux de détresse lors de la deuxième étape dépendent des informations de l'état du véhicule que sont l'enclenchement de la pédale de frein et de la pédale d'accélérateur.

Selon l'invention, un module d'analyse puise une information sur la vitesse du véhicule dans les paramètres internes d'un calculateur de freinage et l'utilise comme valeur initiale d'un procédé d'analyse.

Selon une caractéristique de la présente invention, le module d'analyse puise également une information sur l'accélération du véhicule et utilise pour le procédé d'analyse l'information la plus judicieuse.

Selon une caractéristique de la présente invention, l'accélération longitudinale du véhicule est obtenue lors de la première étape par calcul à partir de l'information sur la vitesse du véhicule puisée dans le calculateur de freinage.

Selon une caractéristique de la présente invention, les conditions d'allumage des feux de détresse lors de la deuxième étape dépendent des informations de l'état du véhicule que sont l'activation d'un régulateur de freinage, la décélération et la vitesse du véhicule.

Selon une caractéristique de la présente invention, la commande de l'actionneur lors de l'étape n'est réalisée que pour un certain degré critique, ladite commande étant dépendante de temporisations d'allumage ou d'extinction des feux.

Selon une caractéristique de la présente invention, une durée de temporisation est le multiple du temps de cycle du procédé.

D'autres caractéristiques et avantages de l'invention apparaîtront à la lecture de la description détaillée qui suit pour la compréhension de laquelle on se reportera aux dessins annexés dans lesquels :

- la figure 1 est une vue schématique d'un véhicule équipé d'un système de gestion des feux de détresse selon l'invention.
- la figure 2 est une représentation des différentes étapes du procédé mis en oeuvre au moyen du système de gestion représenté à la figure 1.
- la figure 3 est une représentation de l'étape du procédé représenté à la figure 2 mettant à jour les conditions d'allumage et d'extinction des feux de détresse.
- la figure 4 est une représentation de l'étape du procédé représenté à la figure 2 assurant la décision d'allumage ou d'extinction.

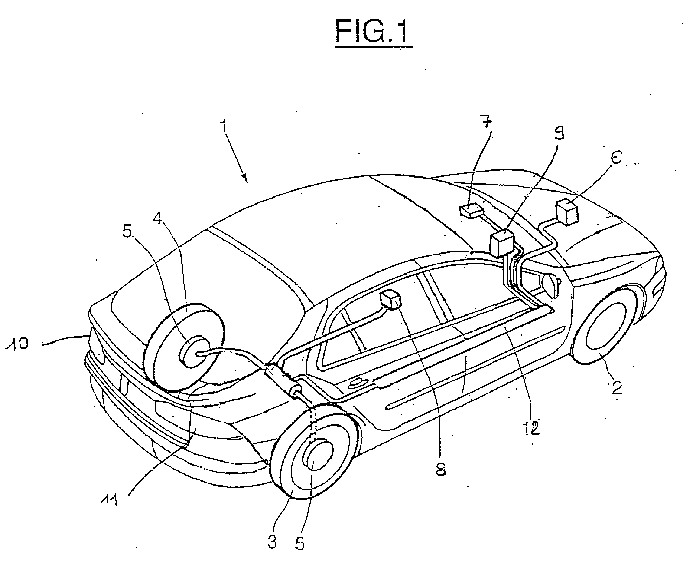

Comme on peut le voir sur la figure 1, un véhicule référencé 1 dans son ensemble est pourvu de deux roues avant 2, dont une seule est visible, équipées de freins et de deux roues arrières 3,4 équipées de frein 5, d'un calculateur de freinage 6 relié à quatre capteurs de paramètres de rotation, chacun associé à une roue avant 2 ou arrière 4 et d'une pédale de frein 7.

Le véhicule 1 comprend en outre, un module 8 d'analyse des situations critiques, un actionneur 9 des feux de détresse 10,11, l'échange d'information entre ces différents éléments et le calculateur 6 étant réalisé par un bus de communication 12, par exemple de type CAN.

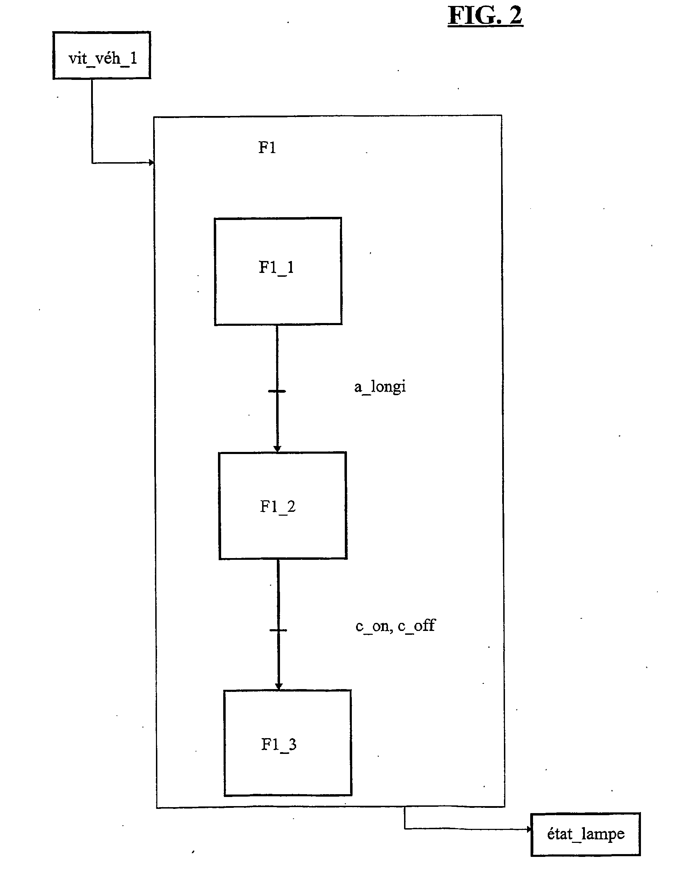

A chaque cycle de calcul, le programme principal exécute la fonction F1 représentée figure 2, avec en entrée une nouvelle valeur de la vitesse du véhicule, obtenue par le module du calculateur de freinage. En sortie, la fonction met à jour la variable caractéristique de l'état de la lampe, permettant de décider de la commande de l'actionneur des feux de détresse. Ladite variable est alors transmise par le bus CAN ou active directement la commande des feux de détresse.

La fonction F1, nommée «allumage et extinction automatique des feux de détresse », est composée successivement des fonctions FI_1, « calcul de l'accélération longitudinal », F1_2, «conditions d'allumage et d'extinction » et F1_3, « décision sur l'allumage ou l'extinction ».

La fonction F1_1 consiste en une estimation simple de l'accélération, réalisée à partir de l'information donnée par le calculateur de freinage sur la vitesse du véhicule. Cette estimation peut être obtenue par le calcul suivant :

$$a\_longi\_1 = n * ( vit\_v\acute{e}h\_1 - vit\_v\acute{e}h\_2 ) / btp + (1-n) * a\_longi\_2$$

a_longi_1    : accélération longitudinale du véhicule, au pas de temps courant
a_longi_2    : accélération longitudinale du véhicule, au pas de temps précédent
vit_véh_1    : vitesse du véhicule, au pas de temps courant

vit_véh_2    : vitesse du véhicule, au pas de temps précédent
btp            : période de mise à jour de l'information (vit_véh_1)

Préférentiellement, la plage des accélérations varie de -10 à 2.70 m/s$^2$, pour une résolution de 0,05 m/s$^2$. Préférentiellement, la plage des vitesses varie de 0 à 300 km/h, pour une résolution de 0,01 km/h.

Dans le cadre de cette estimation d'accélération, un filtre utilisant une mémorisation d'une valeur supplémentaire de l'information concernant la vitesse du véhicule, vit_véh_3.

La valeur a_longi_1 en sortie de la fonction F 1_1 va être utilisée au cours de la fonction suivante F1_2, pendant laquelle vont être mis à jour les compteurs d'état de l'allumage et de l'extinction des feux de détresse, c_on et c_off. Il peut être envisagé dans un deuxième mode de réalisation de puiser cette information directement dans les paramètres internes du calculateur de freinage afin d'utiliser la donnée la plus sure pour la fonction F1_2.

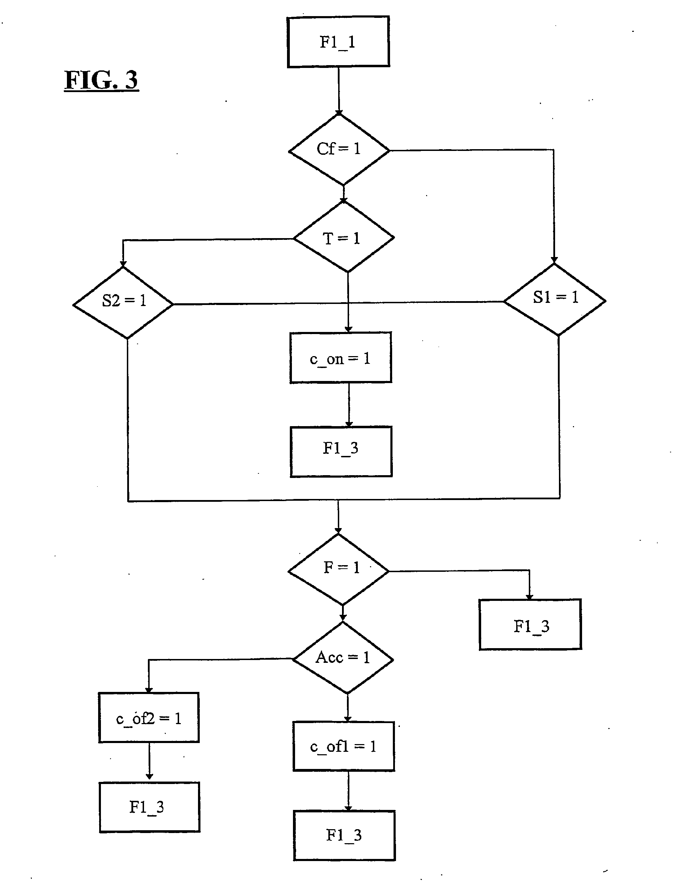

Les conditions d'allumage et d'extinction obéissent au schéma de la figure 3.

Soit Cf une variable de l'état du calculateur de freinage qui vaut 1 si le système de régulation ABS est activé. Soit T une variable de temps qui vaut 1 si ledit système ABS est activé depuis un temps supérieur à un seuil correspondant à une faible adhérence. Soit S1 une variable qui vaut 1 si la décélération du véhicule est supérieure à un premier seuil dit seuil de décélération sur haute adhérence. Soit S2 une variable qui vaut 1 si la décélération du véhicule est supérieure à un second seuil dit seuil de décélération sur moyenne adhérence. Soit F une variable représentative de la position de la pédale de frein qui vaut 1 si la pédale de frein est activée. Soit Acc une variable qui vaut 1 si le véhicule réaccélère. Soit c_on une variable représentant un compteur pour l'allumage des feux de détresse qui vaut 1 si les conditions requises sont présentes pour l'allumage des feux de détresse, auquel cas le compteur est incrémenté d'une valeur décidée préalablement. Soit c_of1 et c_of2 des variables représentant des compteurs pour l'extinction des feux de détresse qui valent 1 si les conditions requises sont présentes pour l'extinction des feux de détresse, le compteur représenté par la variable c_of1 étant alors incrémenté d'une valeur incr_c_of1 décidée préalablement et le compteur c_of2 étant alors incrémenté d'une valeur supérieure à incr_c_of2. Simultanément, lorsque la variable c_on prend la valeur 1, les compteurs représentés par les variables c_of1 et c_of2 sont remis à zéro. De même, lorsque les variables c_of1 ou c_of2 prennent la valeur 1, le compteur représenté par la variable c_on est remis à zéro.

A partir d'un état où l'on connaît la donnée a longi_1, on effectue un premier test sur la variable Cf. Si Cf vaut 1, on effectue un deuxième test sur la variable T. Si T vaut 1, on commande c_on = 1 et on enclenche la phase (c) de décision. Si T vaut 0, on effectue un troisième test sur la variable S2. Si S2 vaut 1, on commande c_on = 1 et on enclenche la phase (c). Si Cf vaut 0, on effectue un quatrième test sur la variable S1. Si S1 vaut 1, on commande c_on = 1 et on enclenche la phase (c). Si S1 ou S2 vaut 0, on effectue un cinquième test sur la variable F. Si F vaut 1, on enclenche la phase (c) sans modification des différents compteurs. Enfin, si F vaut 0, on effectue un sixième test sur la variable Acc. Si Acc vaut 1, on commande c_of2 = 1 et on enclenche la phase (c). Si Acc vaut 0, on commande c_of 1 = 1 et on enclenche la phase (c).

Les conditions d'allumage des feux de détresse prennent donc en compte avec discernement les conditions d'adhérence du véhicule, la réaction du calculateur de freinage en correspondance et la décélération du véhicule.

Les conditions d'extinction des feux de détresse sont elles au titre de deux : Soit les conditions d'allumage ne sont plus remplies et simultanément la pédale de frein n'est plus activée, cette dernière information étant disponible sur le bus CAN, on éteint alors les feux de détresse après un certain temps. Soit le véhicule réaccélère, on éteint dans ce cas les feux de détresse après un temps plus bref que le temps précédent.

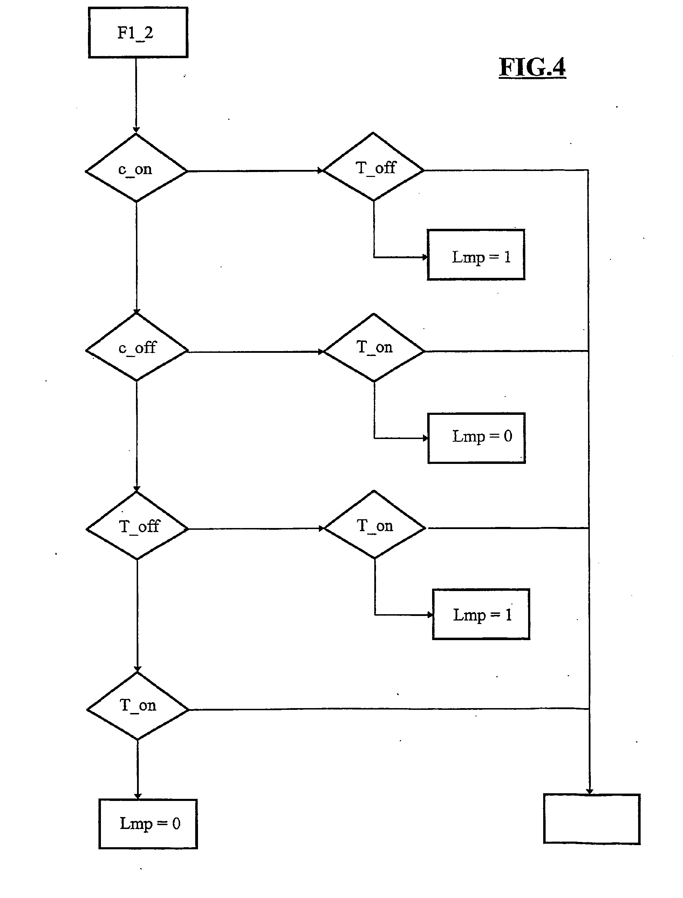

La fonction F1_3 est une étape de décision, schématisé par la figure 4.

Cette étape va comparer les valeurs d'entrée, que sont les états des compteurs c_on et c_off, à des seuils et cumuler cette information à l'état des différentes temporisations prises en compte par le module d'analyse.

Soit T_on une variable binaire qui vaut 1 si l'extinction est interdite et 0 si l'extinction est autorisée. Soit T_off une variable binaire qui vaut 1 si l'allumage est interdit et 0 si l'allumage est autorisée. Soit S3 une variable qui vaut 1 si le compteur c_on est supérieur à une valeur déterminée. Soit S4 une variable qui vaut 1 si le compteur c_of1 ou c_of2 est supérieur à une valeur déterminée. Soit enfin la variable Lmp qui vaut 1 lorsque l'on transmet la commande vers l'actionneur pour l'allumage automatique des feux de détresse et qui vaut 0 lorsque l'on transmet la commande vers l'actionneur pour l'extinction automatique des feux de détresse. Simultanément, lorsque Lmp vaut respectivement 1 et 0, respectivement T_off et T_on sont réinitialisés à zéro.

A partir d'un état où l'on connaît les valeurs des compteurs c_on et c_off (c_of1 et c_of2), on effectue un premier test sur la variable c_on. Si c_on vaut 1, on effectue un deuxième test sur la variable T_off. Si T_off vaut 0, on commande Lmp = 1. Si T_off vaut 1, on n'effectue pas de nouvelle commande sur Lmp. Si c_on vaut 0, on effectue un troisième test sur la variable c_off. Si c_off vaut 1, on effectue un quatrième test sur la variable T_on. Si T_on vaut 0, on commande Lmp = 0. Si T_on vaut 1, on n'effectue pas de nouvelle commande sur Lmp. Si c_off vaut 0, on effectue un cinquième test sur la variable T_off. Si T_off vaut 0, on effectue un sixième test sur la variable T_on. Si T_on vaut 1, on commande Lmp = 1. Si T_on vaut 0, on n'effectue pas de nouvelle commande sur Lmp. Enfin, si T_off vaut 1, on effectue un septième test sur la variable T_on. Si T_on vaut 0, on commande Lmp = 0. Si T_on vaut 1, on n'effectue pas de nouvelle commande sur Lmp.

Les mises à jour des commandes Lmp dirigées vers l'actionneur des feux de détresse sont accompagnées de la mise à jour de différentes temporisations comme la durée minimale pour l'allumage entraînant à échéance la mise à zéro de la variable T_on, la durée maximale pour l'extinction entraînant à échéance la mise à zéro de la variable T_off, et la durée maximale d'allumage par rapport à la dernière commande entraînant une commande d'extinction à l'actionneur des feux de détresse. Afin de simplifier le codage, les durées de temporisation sont préférentiellement des multiples de la période du cycle de calcul.

L'invention n'est nullement limitée au mode de réalisation décrit et illustré qui n'a été donné qu'à titre d'exemple.

## Revendications

1. Procédé d'analyse de l'allumage et de l'extinction des feux de détresse d'un véhicule (1) comportant un calculateur de freinage (6), une pédale de frein (7) et une pédale d'accélérateur (13), des feux de détresse (10,11), un actionneur (9) desdits feux de détresse, un module d'analyse (8) qui puise une information sur la vitesse et éventuellement l'accélération du véhicule dans les paramètres internes du calculateur de freinage (6) et utilise une de ces informations comme valeur initiale du procédé d'analyse, dans lequel on réalise dans une première étape (F1_1) l'estimation de l'accélération longitudinale du véhicule (1), on intègre ladite estimation avec différents états du véhicule (1) dans une deuxième étape (F1_2) pour déterminer si le véhicule est dans une situation critique, on analyse enfin dans une dernière étape (F1_3) ladite situation critique pour déterminer si les feux de détresse (10,11) doivent être allumés, éteints ou laissés dans leur état précédent, **caractérisé en ce que** des conditions d'extinction des feux de détresse (10, 11) sont déterminées lors de la deuxième étape (F1_2) et dépendent des informations de l'état du véhicule (1) que sont l'enclenchement de la pédale de frein (7) et de la pédale d'accélérateur (13).

2. Procédé d'analyse selon la revendication 1, **caractérisé en ce que** l'accélération longitudinale du véhicule (1) est obtenue lors de la première étape (F1_1) par calcul à partir de l'information sur la vitesse du véhicule (1) puisée dans le calculateur de freinage (6).

3. Procédé d'analyse selon la revendication 1 ou 2, **caractérisé en ce que** des conditions d'allumage des feux de détresse (10,11) sont déterminées lors de la deuxième étape (F1_2) et dépendent des informations de l'état du véhicule (1) que sont l'activation d'un régulateur de freinage, la décélération et la vitesse du véhicule (1).

4. Procédé d'analyse selon l'une des revendications 1 à 3, **caractérisé en ce que** la commande de l'actionneur (9) lors de l'étape (F1_3) n'est réalisée que pour un certain degré critique, ladite commande étant dépendante de temporisations d'allumage ou d'extinction des feux (10,11).

5. Procédé d'analyse selon la revendication 4, **caractérisé en ce que** une durée de temporisation est le multiple du temps de cycle du procédé.

## Claims

1. Method of analyzing the switching on and switching off of the hazard warning lights of a vehicle (1) comprising a braking computer (6), a brake pedal (7) and an accelerator pedal (13), hazard warning lights (10, 11), an actuator (9) for said hazard warning lights, an analysis module (8) which obtains an item of information concerning the speed and optionally the acceleration of the vehicle from the internal parameters of the braking computer (6) and uses one of these items of information as the initial value for the analysis method, in which method, in a first step (F1_1), the longitudinal acceleration of the vehicle (1) is estimated, said estimation is integrated with the various states of the vehicle (1) in a second step (F1_2) to determine whether the vehicle is in an emergency situation, and finally, in a final step (F1_3), said emergency situation is analyzed to determine whether the hazard warning lights (10, 11) must be switched on, off or left in their previous state, **characterized in that** conditions for switching off the hazard warning lights (10, 11) are determined in the second step (F1_2) and depend on the information concerning the status of the vehicle (1) that is the activation of the brake pedal (7) and of the accelerator pedal (13).

2. Analysis method according to Claim 1, **characterized in that** the longitudinal acceleration of the vehicle (1) is obtained in the first step (F1_1) by computation based on the information concerning the speed of the vehicle (1) obtained from the braking computer (6).

3. Analysis method according to Claim 1 or 2, **characterized in that** conditions for switching on the hazard warning lights (10, 11) are determined in the second step (F1_2) and depend on the information concerning the status of the vehicle (1) that is the activation of a braking regulator, the deceleration and the speed of the vehicle (1).

4. Analysis method according to one of Claims 1 to 3, **characterized in that** the control of the actuator (9) in the step (F1_3) is provided only for a certain critical degree, said control being dependent on the light (10, 11) switching-on or switching-off timers.

5. Analysis method according to Claim 4, **characterized in that** a timer duration is a multiple of the cycle time of the method.

## Patentansprüche

1. Verfahren zur Analyse des Einschaltens und des Ausschaltens der Warnblinklichter eines Fahrzeugs (1), das einen Bremsrechner (6), ein Bremspedal (7) und ein Gaspedal (13), Warnblinklichter (10, 11), einen Stellantrieb (9) der Warnblinklichter und einen Analysemodul (8) aufweist, der eine Information über die Geschwindigkeit und ggf. die Beschleunigung des Fahrzeugs aus den internen Parametern des Bremsrechners (6) entnimmt und eine dieser Informationen als Anfangswert des Analyseverfahrens verwendet, bei dem in einem ersten Schritt (F1_1) die Schätzung der Längsbeschleunigung des Fahrzeugs (1) durchgeführt wird, die Schätzung in einem zweiten Schritt (F1_2) mit verschiedenen Zuständen des Fahrzeugs (1) integriert wird, um zu bestimmen, ob das Fahrzeug in einer kritischen Situation ist, schließlich in einem letzten Schritt (F1_3) die kritische Situation analysiert wird, um zu bestimmen, ob die Warnblinklichter (10, 11) eingeschaltet, ausgeschaltet oder in ihrem vorhergehenden Zustand gelassen werden sollen, **dadurch gekennzeichnet, dass** Ausschaltbedingungen der Warnblinklichter (10, 11) im zweiten Schritt (F1_2) bestimmt werden und von den Informationen über den Zustand des Fahrzeugs (1) abhängen, die das Betätigen des Bremspedals (7) und des Gaspedals (13) sind.

2. Analyseverfahren nach Anspruch 1, **dadurch gekennzeichnet, dass** die Längsbeschleunigung des Fahrzeugs (1) im ersten Schritt (F1_1) durch Berechnung ausgehend von der Information über die Geschwindigkeit des Fahrzeugs (1) erhalten wird, die aus dem Bremsrechner (6) entnommen wird.

3. Analyseverfahren nach Anspruch 1 oder 2, **dadurch gekennzeichnet, dass** Einschaltbedingungen der Warnblinklichter (10, 11) im zweiten Schritte (F1_2) bestimmt werden und von Informationen über den Zustand des Fahrzeugs (1) abhängen, die die Aktivierung eines Bremskraftreglers, das Bremsen und die Geschwindigkeit des Fahrzeugs (1) sind.

4. Analyseverfahren nach einem der Ansprüche 1 bis 3, **dadurch gekennzeichnet, dass** die Steuerung des Stellantriebs (9) im Schritt (F1_3) nur bei einem bestimmten kritischen Grad durchgeführt wird, wobei die Steuerung von den Einschalt- oder Ausschaltverzögerungen der Lichter (10, 11) abhängt.

5. Analyseverfahren nach Anspruch 4, **dadurch gekennzeichnet, dass** eine Verzögerungsdauer das Vielfache der Zykluszeit des Verfahrens ist.

# FIG.1

**FIG. 2**

vit_véh_1

F1

F1_1

a_longi

F1_2

c_on, c_off

F1_3

état_lampe

8

**FIG. 3**

**FIG.4**

```
┌─────────┐
│  F1_2   │
└────┬────┘
     │
     ▼
   ◇ c_on ◇ ──────────────────► ◇ T_off ◇ ──────────────────────────┐
     │                              │                                 │
     │                              ▼                                 │
     │                          ┌─────────┐                          │
     │                          │ Lmp = 1 │                          │
     │                          └─────────┘                          │
     ▼                                                               │
   ◇ c_off ◇ ─────────────────► ◇ T_on ◇ ───────────────────────────┤
     │                              │                                 │
     │                              ▼                                 │
     │                          ┌─────────┐                          │
     │                          │ Lmp = 0 │                          │
     │                          └─────────┘                          │
     ▼                                                               │
   ◇ T_off ◇ ─────────────────► ◇ T_on ◇ ───────────────────────────┤
     │                              │                                 │
     │                              ▼                                 │
     │                          ┌─────────┐                          │
     │                          │ Lmp = 1 │                          │
     │                          └─────────┘                          │
     ▼                                                               │
   ◇ T_on ◇ ──────────────────────────────────────────────────────┐ │
     │                                                             │ │
     ▼                                                             ▼ ▼
┌─────────┐                                                    ┌─────────┐
│ Lmp = 0 │                                                    │         │
└─────────┘                                                    └─────────┘
```